# EUROPÄISCHE PATENTANMELDUNG

(11) **EP 1 801 569 A2**
(43) Veröffentlichungstag der Anmeldung: **27.06.2007**
(21) Anmeldenummer: 06023194.1
(22) Anmeldetag: 08.11.2006
(51) Int. Cl.: G01N 21/95

(54) **Verfahren und Vorrichtung zum Erkennen von Rissen in Silizium-Wafern**

(30) Priorität: 23.12.2005 DE 102005061785
(71) Anmelder: Basler Aktiengesellschaft, 22926 Ahrensburg (DE)
(72) Erfinder: Gramatke, Martin, 22926 Ahrensburg (DE); Mix, Eric, 22761 Hamburg (DE); Fornasiero, Livio, 20535 Hamburg (DE); Biemann, Volker, 22927 Grosshansdorf (DE)
(74) Vertreter: Jaeschke, Rainer

(57) **Zusammenfassung**

Die Erfindung betrifft ein Verfahren zum Erkennen von Rissen, insbesondere Mikrorissen, in dünnen Wafer-Platten, insbesondere Halbleiter- oder Silizium-Wafern, bei welchem Verfahren der Wafer mit Infrarotlicht durchleuchtet und durch das durch den Wafer transmittierende Licht wenigstens eine Kamera belichtet wird, die wenigstens ein erstes Bild zumindest eines Abschnitts des Wafers erzeugt, das in einer Bildverarbeitung ausgewertet wird. Gemäß der Erfindung wird vorgeschlagen, dass wenigstens eine Oberfläche des Wafers zudem mit Licht beleuchtet wird und das an der Oberfläche reflektierte, gestreute oder gebeugte Licht durch wenigstens eine Kamera aufgenommen wird, die wenigstens ein zweites Bild des gleichen Abschnitts des Wafers erzeugt, und dass in der Bildverarbeitung durch eine Verknüpfung des ersten und zweiten Bilds eventuell vorhandene Risse detektiert werden. Auch betrifft die Erfindung eine Vorrichtung zum Durchführen dieses Verfahrens.

## Beschreibung

Die Erfindung betrifft ein Verfahren zum Erkennen von Rissen, insbesondere Mikrorissen, in dünnen Wafer-Platten, insbesondere Halbleiter- oder Silizium-Wafern, bei welchem Verfahren der Wafer mit Infrarotlicht durchleuchtet und durch das durch den Wafer transmittierende Licht wenigstens eine Kamera belichtet wird, die wenigstens ein erstes Bild zumindest eines Abschnitts des Wafers erzeugt, das in einer Bildverarbeitung ausgewertet wird. Auch betrifft die Erfindung eine Vorrichtung insbesondere zum Durchführen dieses Verfahrens.

Silizium-Wafer werden beispielsweise in der Photovoltaik eingesetzt. Es handelt sich dabei um dünne Halbleiterplatten, die auf beiden Seiten mit Elektroden versehen sind. Durch Lichteinfall kann Strom erzeugt werden.

Grundsätzlich kann zwischen monokristallinen und polykristallinen Halbleiter-Wafern unterschieden werden. Polykristalline Halbleiter-Wafer weisen eine Vielzahl von Kristallen auf, und die Korngrenzen sind auf der Oberfläche auch mit dem bloßen Auge gut erkennbar. Gegenwärtig werden solche Halbleiter-Wafer werden aus einem Block geschnitten. Aus Gründen der Materialersparnis werden, besonders dünne Platten gefertigt.

Solche dünnen Wafer-Platten mit einer Dicke von unter einem Millimeter sind spröde und sehr empfindlich gegen Biegung. Gleichwohl müssen sie bis zur Fertigstellung einige Bearbeitungsstationen und Handhabungsstationen durchlaufen. Entsprechendes gilt auch für herkömmliche Waferplatten in der Halbleiterindustrie und auch bedampfte Substrate, wie bedampfte Glasscheiben. Es wird daher im Folgenden überwiegend von Wafern, Waferplatten oder Halbleiter-Wafer gesprochen, ohne dass damit eine Beschränkung verbunden sein soll.

Es besteht die Vermutung, dass in solchen Halbleiter-Wafern vorhandene Risse und Mikrorisse zu einem frühzeitigen Versagen und Bruch der Wafer-Platte führen. Dies verursacht zum einem im laufenden Produktionsprozess eine erhebliche Störung, da die einzelnen Bruchstücke der zerbrochenen Platte vollständig aus der Produktionslinie entfernt werden müssen. Auch führt der Bruch nur einer Wafer-Platte häufig zu einer Zerstörung von weiteren im Produktionsprozess nachfolgenden Halbleiterplatten. Häufig muss daher die Produktionslinie angehalten werden, und ein unerwünscht langer Stillstand ist nicht zu vermeiden. Zum anderen führt ein Bruch des fertigen und installierten Wafers häufig zu einem Ausfall beispielsweise des gesamten Photovoltaik-Moduls.

Kleine Risse und Mikrorisse in derartigen Halbleiter-Wafern sind in der Regel mit dem Auge nicht zu erkennen. Auch versagen bekannte optische Messmethoden, da mit herkömmlichen elektronischen Kameras und herkömmlicher Beleuchtung im Dunkelfeld oder Hellfeld die Risse ebenfalls nicht zu detektieren sind. Es hat sich aber gezeigt, dass Halbleiter-Wafer für Infrarotlicht durchlässig sind. Aus der JP-A-08220008 ist es daher bekannt, den Halbleiter-Wafer mit diffusem Infrarotlicht zu durchleuchten und das transmittierende Licht aufzunehmen, um Risse zu detektieren. Risse sind bei der Durchleuchtung besser zu erkennen, da sie die Richtung des transmittierenden Lichts verändern. Sie erscheinen in der Regel als dunkle Linien.

Ein weiteres Problem besteht bei der Prüfung von Halbleiter-Wafern aufgrund der kristallinen Struktur. Die Kristallgrenzen bewirken ebenfalls eine Veränderung des transmittierenden Lichts. Es werden daher eine Vielzahl von Hell-Dunkel-Kontrasten und -Konturen von der Kamera aufgenommen, von denen der größte Teil den unschädlichen Kristallgrenzen zuzuordnen ist. Risse können daher mit einem einfachen Durchlichtverfahren nicht immer zuverlässig erkannt werden.

Der Erfindung liegt die Aufgabe zugrunde, ein Verfahren und eine Vorrichtung der eingangs geschilderten Art so auszubilden, dass eine zuverlässige Detektion von Rissen und insbesondere von Rissen in Wafern und Halbleiter-Wafern ermöglicht wird.

Die Aufgabe wird gemäß der Erfindung dadurch gelöst, dass wenigstens eine Oberfläche des Wafers mit Licht beleuchtet wird und das an der Oberfläche reflektierte, gestreute oder gebeugte Licht durch wenigstens eine Kamera aufgenommen wird, die wenigstens ein zweites Bild des gleichen Abschnitts des Wafers erzeugt, und dass in der Bildverarbeitung durch eine Verknüpfung des ersten und zweiten Bilds eventuell vorhandene Risse detektiert werden. Es werden somit zwei Bilder von nahezu demselben Abschnitt des Wafers erzeugt, nämlich einmal in der Durchsicht und einmal in der Draufsicht. Während in der Durchsicht die Risse oder Risse erkennbar sind und aufgenommen werden, fehlen diese bei dem Bild der Draufsicht. Durch Vergleich der beiden Bilder können die Risse detektiert werden.

Besonders günstig ist es, wenn der Wafer mit langwelligem Infrarotlicht bis weit in den Infrarotbereich mit einer Wellenlänge von beispielsweise 2000 nm durchleuchtet wird. Bei Silizium-Wafern wird eine gute Durchlässigkeit bereits bei einer Wellenlänge von 1400 nm erreicht. Bei kurzwelligerem Infrarotlicht wird ein Teil des Lichts am Wafer reflektiert, gestreut oder gebeugt. Dieser Anteil kann grundsätzlich zur Belichtung der Kamera zum Erzeugen der Draufsicht genutzt werden.

Allerdings ist es günstig, wenn die Draufsicht mit kurzwelligem Licht, beispielsweise im sichtbaren Bereich oder Ultraviolett-Bereich erzeugt wird. Die Beleuchtung kann durch unterschiedliche und separate Leuchten oder aber durch separate Leuchten mit einem entsprechend großen Wellenlängenspektrum oder einer einzigen Leuchte mit einem entsprechend großen Wellenlängenspektrum erfolgen. Auch können die Wellenlängen oder Wellenlängenbereiche der eingesetzten Leuchten durch entsprechende Filter eingestellt werden.

Die Erfindung nutzt aus, dass bei einer Beleuchtung mit unterschiedlichem Licht der gleiche Abschnitt des Wafers anders erscheint. Im optimalen Fall erscheinen bei der Durchleuchtung des Wafers mit Infrarotlicht nur die Risse und die Korngrenzen, während bei der Beleuchtung beispielsweise mit sichtbarem Licht nur dieselben Korngrenzen der Kristalle sichtbar sind. Wird beispielsweise aus den beiden Bildern ein Differenzbild erzeugt, bleiben vor allem die im Infrarotlicht zusätzlich sichtbaren Risse im Differenzbild erhalten.

Diese können in einem weiteren Bildauswertschritt zuverlässig erkannt werden.

In der Regel werden aber auch bei einem Differenzbild nicht ausschließlich die Risse sichtbar bleiben. Vielmehr muss davon ausgegangen werden, dass auch Korngrenzen bei unterschiedlicher Beleuchtung eine unterschiedliche Erscheinungsform aufweisen, so dass die bloße Bildung eines Differenzbildes nicht immer ausreichend sein wird.

Es ist daher gemäß der Erfindung weiterhin vorgesehen, dass die Bildverarbeitung Kantenerkennungs- und Linienerkennungsverfahren umfasst. Derartige Linien- und Kantenerkennungsverfahren sind an sich allgemein bekannt und bedürfen daher an dieser Stelle keiner näheren Erläuterung. Damit können die durch die durch die Verknüpfung der beiden Bilder detektierten Bereiche möglicher Risse exakter ausgewertet werden. Befinden sich im Umfeld und auf beiden Seiten eines möglichen Risses ähnliche Grauwerte, handelt es sich um eine Linie in einem an sich homogenen Abschnitt des Wafers. Eine solche Linie wird mit großer Wahrscheinlichkeit durch einen tatsächlichen Riss gebildet.

Befinden sich auf beiden Seiten des möglichen Risses unterschiedliche Grauwerte, handelt es sich um eine Kante, die verschiedene Grauwertbereiche begrenzt. Eine solche Kante wird mit großer Wahrscheinlichkeit durch eine Korngrenze gebildet, so dass in diesem Fall kein Riss vorhanden ist.

Ein weiteres Problem bei dem Einsatz von Infrarotlicht besteht darin, dass elektronische Kameras in der Regel für Infrarotlicht nicht ohne weiteres empfindlich sind. Vor allem bestehen die heutzutage wirtschaftlich günstigen und hoch auflösenden Sensoren für solche Kameras ebenfalls auf Halbleiterbasis. Sie werden demnach ebenfalls mit dem Infrarotlicht durchleuchtet und mit größer werdender Wellenlänge zunehmend unempfindlicher.

Zur Bestimmung einer optimierten Wellenlänge des Infrarotlichts kann so vorgegangen werden, dass zum einen die qualitative Empfindlichkeit der Kamera in Abhängigkeit von der Wellenlänge ermittelt und beispielsweise in einem Graph eingetragen wird. Zum anderen wird die Durchlässigkeit des Wafers in Abhängigkeit von der Wellenlänge ermittelt und beispielsweise auch in den Graph der Empfindlichkeit der Kamera eingezeichnet. Der Schnittpunkt der Linien gibt einen optimierten Wellenlängenbereich an, mit dem der Wafer durchleuchtet werden kann. Im Bereich des Schnittpunkts wird die Kamera in der Regel noch eine hinreichende Empfindlichkeit aufweisen, während der Wafer bereits hinreichend durchlässig ist.

Es hat sich bei der Verwendung von Kameras mit siliziumhaltigen Sensoren und bei einer Vielzahl von Halbleiter-Wafern und insbesondere Silizium-Wafern gezeigt, dass es günstig ist, wenn der Wafer mit Infrarotlicht mit einer Wellenlänge von 900 nm bis 1200 nm, und weiter vorzugsweise zwischen 950 nm und 1100 nm durchleuchtet wird. Die Oberfläche des Wafers kann mit Licht mit einer kleineren Wellenlänge als die des Infrarotlichts, vorzugsweise mit einer Wellenlänge von 200 nm bis 900 nm, beleuchtet werden.

Sofern besondere Infrarotkameras, beispielsweise mit einem galliumhaltigen Sensor, eingesetzt werden, kann auch langwelliges Infrarotlicht mit einer Wellenlänge von 1200 bis 2000 nm eingesetzt werden. Solche Kameras sind beispielsweise in einem Wellenlängenbereich von 1400 nm bis 1500 nm sehr empfindlich, und der Halbleiter-Wafer ist gut durchlässig.

Es ist zweckmäßig, wenn der Wafer mit einem Linienlicht durchleuchtet wird. Dabei können die optische Achse und das Linienlicht in einer Ebene liegen und beispielsweise senkrecht zur Waferoberfläche verlaufen. Günstig ist es jedoch, wenn die optische Achse der Kamera außerhalb der Ebene des durchleuchtenden Linienlichts liegt. Dies hat den Vorteil, dass ein Überbelichten der Kamera an den Randbereichen des Wafers, an denen das Licht ungehindert vorbeistrahlt, verhindert wird. Solch eine starke Überbelichtung führt ansonsten zum so genannten "blooming"-Effekt, wodurch das Bild zumindest im Randbereich unbrauchbar wird. Durch die winklige Anordnung von der das Linienlicht enthaltenden Ebene und der optischen Achse der Kamera wird der auf der der Lichtquelle gegenüber liegenden Seite des Wafers durchscheinende Lichtstreifen aufgenommen.

Es kann zudem vorgesehen werden, dass der Wafer mit einem Linienlicht beleuchtet wird. Auch hier ist es zweckmäßig, wenn die optische Achse der Kamera außerhalb der Ebene des beleuchtenden Linienlichts liegt derart, dass kein direkt reflektiertes Licht aufgenommen wird. Damit wird das an der Oberfläche des Wafers gestreute oder gebeugte Licht im so genannten Dunkelfeld aufgenommen.

Weiterhin ist es gemäß der Erfindung vorgesehen, dass der Wafer relativ zu der Kamera und/oder der Beleuchtung bewegt wird. Es können hoch auflösende Zeilenkameras eingesetzt werden, um ein zeilenweise aufgebautes Bild zu erzeugen.

Zweckmäßig ist es, wenn die Kamera zur Aufnahme des transmitterenden Infrarotlicht und die Kamera zur Aufnahme der Oberfläche synchronisiert werden derart, dass gleichzeitig der gleiche Abschnitt des Wafers be-und durchleuchtet wird. Sowohl das Infrarotlicht als auch das Licht, das an der Oberflleche reflektiert, gebeugt oder gestreut wird, beispielsweise der nicht transmittierende Lichtanteil des verwendeten Infratorlichts oder Licht anderer Wellenlänge, beispielsweise sichtbares Licht, können gleichzeitig den gleichen Abschnitt des Wafers beleuchten. Beide Kameras nehmen zur gleichen Zeit den gleichen Abschnitt auf, so dass eine sich anschließende Bildverarbeitung erleichtert wird.

Die linienförmige Beleuchtung hat zudem den Vorteil, dass eine vollständige Erfassung des Wafers möglich ist. Die Transporteinrichtung, in der Regel ein Transportband, braucht nur einen schmalen Spalt aufzuweisen, die von dem Wafer im Zuge seiner Bewegung überspannt wird. Die vollständige Breite des Wafers senkrecht zur Transportrichtung liegt in diesem Spalt frei und kann optisch vollständig erfasst werden. Ein Einsatz des Verfahrens in laufenden Produktionsprozessen ohne Auswirkung auf die Herstellungsgeschwindigkeit ist daher möglich.

Die Erfindung betrifft auch eine Vorrichtung zum Erkennen von Rissen, insbesondere Mikrorissen, in dünnen Wafer-Platten, insbesondere Halbleiter- oder Silizium-Wafern, welche Vorrichtung wenigstens eine Infrarotlichtquelle, um den Wafer zu durchleuchten, und wenigstens eine für Infrarotlicht empfindliche Kamera aufweist, um das durch den Wafer transmittierende Licht zu empfangen und wenigstens ein erstes Bild zumindest eines Abschnitts des Wafers aufzunehmen. Insbesondere zum Durchführen des oben beschriebenen Verfahrens ist vorgesehen, dass wenigstens eine Lichtquelle, die den Wafer mit Licht beleuchtet, und wenigstens eine für dieses Licht empfindliche Kamera vorhanden ist, um das an wenigstens einer Oberfläche des Wafers reflektierte, gestreute oder gebeugte Licht zu empfangen und wenigstens ein zweites Bild des gleichen Abschnitts des Wafers aufzunehmen. Es werden demnach mit dieser Vorrichtung zwei Bilder nahezu desselben Abschnitts des Wafer erzeugt, nämlich einmal in der Durchsicht und einmal in der Draufsicht. Auf beiden Bildern ist der gleiche Abschnitt des Wafers, jedoch mit unterschiedlichen Inhalten abgebildet. In einer weiterhin vorhandenen Bildverarbeitungseinrichtung können die Unterschiede der Bilder ermittelt und somit die Risse zuverlässig und schnell detektiert werden.

Die Infrarotlichtquelle kann Licht in einem Wellenlängenbereich zwischen 900 nm und 2000 nm und insbesondere zwischen 950 nm und 1500 nm ausstrahlen. Je nach Wahl der Kamera kann auch kurzwelliges Infrarotlicht mit einer Wellenlänge zwischen 950 nm und 1200 nm zweckmäßig sein. Die andere Lichtquelle strahlt vorzugsweise kurzwelliges Licht, vorzugsweise mit einer Wellenlänge von 200 nm bis 700 nm, aus.

Grundsätzlich ist es möglich, dass für das Infrarotlicht zum Erzeugen der Durchsicht und das Licht zum Erzeugen der Draufsicht separate Leuchten eingesetzt werden. Es ist aber auch möglich, dass die Infrarotlichtquelle und die Lichtquelle aus einer Breitbandleuchte gebildet werden, die Licht mit einem breiten Wellenlängenbereich von sehr kurzwelligem Licht, beispielsweise im UV-Bereich, bis zu langwelligem Licht bis weit in den Infrarotbereich von beispielsweise 2000 nm, erzeugt.

Dieses breite Wellenlängenspektrum wird beispielsweise durch eine Halogenleuchte erzeugt. Die jeweiligen Kameras können durch entsprechende optische Mittel, beispielsweise optische Filter, nur für den Infrarotlichtanteil einerseits und für den kurzwelligen, beispielsweise sichtbaren Lichtanteil andererseits empfindlich ausgebildet werden.

Durch die Verwendung nur einer Leuchte kann der optische Aufbau vereinfacht werden. So kann vorgesehen werden, dass eine für Infrarotlicht empfindliche Kamera auf der der Breitbandlichtquelle abgewandten Seite des Wafers angeordnet ist, während eine weitere für sichtbares Licht empfindliche Kamera auf derselben Seite der Breitbandlichtquelle angeordnet ist. Durch diesen Aufbau wird gewährleistet, dass der gleiche Abschnitt einmal im Infrarotlicht auf der einen Kamera und einmal im sichtbaren Licht auf der anderen Kamera abgebildet wird.

Auch können beim Einsatz separater Leuchten für die verschiedenen Beleuchtungen vor den Leuchten entsprechende Filter eingesetzt werden. Bei der Anordnung von zwei Kameras auf gegenüberliegenden Seiten des Wafers dient dieser bereits als guter Filter für das transmittierende Licht, das schließlich die Kamera belichten soll.

Grundsätzlich wäre es auch möglich, nur eine einzige Kamera vorzusehen, deren Objektiv zeitlich aufeinander folgend mit einem Infrarotfilter und einem Filter für sichtbares Licht abdeckbar ist. Auch könnte durch entsprechende optische Mittel das transmittierende Licht von der einen Seite des Wafers zurück in die Kamera auf der anderen Seite geleitet werden, und umgekehrt. Dann ist es günstig, wenn nicht sogar erforderlich, aufeinander folgende Bilder des gleichen Abschnitts zu erzeugen. Dies ist in einem laufenden Produktionsprozess nicht immer ohne weiteres möglich.

Bei der Verwendung von zwei Lichtquellen können auf einer Seite des Wafers eine für Infrarotlicht empfindliche Kamera und eine für sichtbares Licht empfindliche Kamera angeordnet werden, wobei auf dieser Seite die Lichtquelle für sichtbares Licht und auf der gegenüberliegenden Seite des Wafers die Infrarotlichtquelle oder jeweils Breitbandlichtquellen angeordnet sind. Ergänzend kann auf der gegenüberliegenden Seite eine weitere für sichtbares Licht empfindliche Kamera und eine Lichtquelle für sichtbares Licht oder eine Breitbandlichtquelle vorhanden sein. Dann werden beide Oberflächen des Wafers optisch abgebildet. Die im Querschnitt häufig schräg verlaufenden Korngrenzen können dann besser erfasst und von den Rissen unterschieden werden.

Auch ist es möglich, dass auf der der für Infrarotlicht empfindlichen Kamera gegenüber liegenden Seite des Wafers eine weitere für Infrarotlicht empfindliche Kamera und gegenüber eine weitere Lichtquelle für Infrarotlicht vorhanden ist oder die bereits vorhandene Lichtquelle als Breitbandlichtquelle ausgebildet ist. Dann würden eventuell vorhandene Risse, die auch schräg durch den Wafer verlaufen können, ebenfalls von beiden Seiten erfasst. Insgesamt lassen sich somit Risse besser von Korngrenzen unterscheiden, wodurch die Zuverlässigkeit der Erkennung erhöht wird.

Gemäß der Erfindung ist vorgesehen, dass der Wafer relativ zu der Kamera und/oder der Lichtquelle und/oder Infrarotlichtquelle oder Breitbandlichtquelle auf einer Transporteinrichtung in Transportrichtung bewegbar ist.

Besonders zweckmäßig ist es dabei, wenn die Fördermittel der Transporteinrichtung einen Spalt begrenzen, der sich quer zur Transportrichtung über die gesamte Breite des Wafers erstreckt und der von dem Wafer überspannt wird, wobei der überspannende Bereich den in den Kameras abgebildeten Abschnitt des Wafers enthält. Damit ist eine vollständige Erfassung des Wafers einschließlich seiner Randbereiche möglich. Durch den Einsatz von Linienlicht kann der Spalt sehr eng gewählt werden, so dass ein Durchbiegen des Wafers nicht zu befürchten ist.

Die Erfindung wird im Folgenden anhand der schematischen Zeichnung näher erläutert. Es zeigen:
- Fig. 1: die Seitenansicht einer Vorrichtung gemäß der Erfindung,
- Fig. 2: die Seitenansicht einer Vorrichtung gemäß einer anderen Ausführungsform der Erfindung,
- Fig. 3: im Schnitt den Wafer mit einem Riss und einer Korngrenze,
- Fig. 4: die Abbildung eines Wafers unter einer Beleuchtung mit sichtbarem Licht,
- Fig. 5: die Abbildung desselben Wafers wie in Fig. 4 unter Infrarotbeleuchtung und
- Fig. 6: einen Graph, in dem die Empfindlichkeit einer elektronischen Kamera und die Lichtdurchlässigkeit eines Silizium-Wafers in Abhängigkeit von der Wellenlänge des bestrahlenden Lichts eingetragen ist.

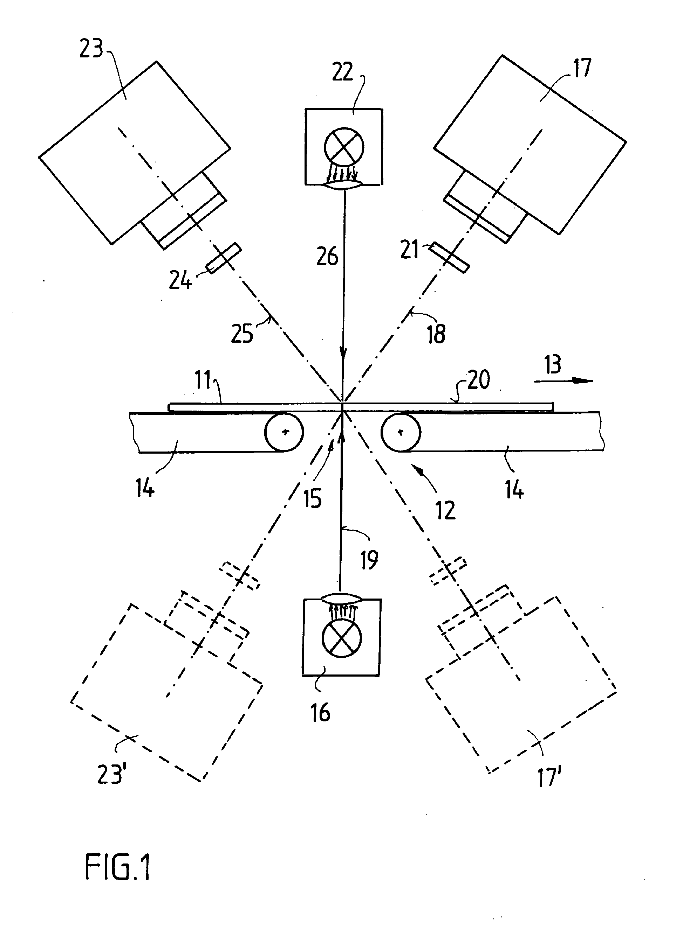

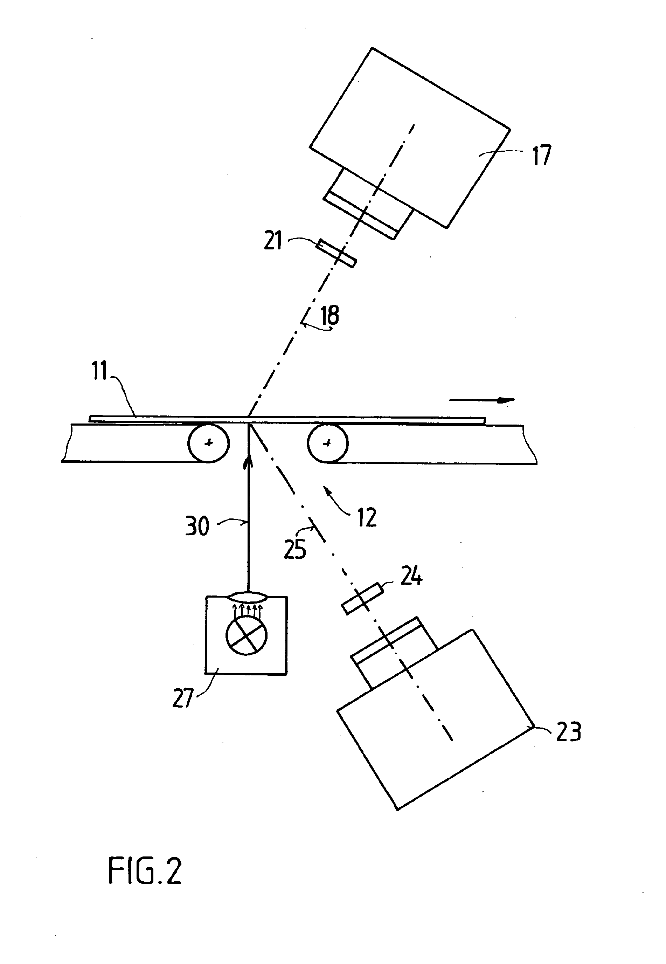

Die in der Zeichnung dargestellte Vorrichtung zum Erkennen von Rissen in einem Halbleiter-Wafer 11, insbesondere einem Silizium-Wafer, weist eine Transporteinrichtung 12 auf, durch die der der Halbleiter-Wafer in Transportrichtung 13 bewegbar ist. Die Transporteinrichtung umfasst zwei Förderbänder 14, die unter Belassung eines Spaltes 15 in Transportrichtung voneinander beabstandet sind. Der Spalt ist so bemessen, dass er von dem Halbleiter-Wafer, wie in Fig. 1 und Fig. 2 gezeigt, überspannt werden kann.

Es ist eine erste Leuchte 16 vorgesehen, die Licht im Infrarotbereich ausstrahlt und den Halbleiter-Wafer 11 im Bereich des Spalts 15 über seine gesamte Breite in der Richtung senkrecht zur Zeichnebene linienförmig beleuchtet. Der Halbleiter-Wafer ist für Infrarotlicht durchlässig, so dass zumindest ein Teil des auftreffenden Lichts durch den Wafer hindurch tritt. Auf der der ersten Leuchte gegenüberliegenden Seite des Wafers 11 ist eine für Infrarotlicht empfindliche elektronische Kamera 17 vorhanden, die das hindurch tretende Licht aufnimmt. Die Kamera kann hierzu mit einem entsprechenden optischen Filter 21 versehen sein. Die Leuchte 16 kann als Breitbandleuchte mit einem breiten Wellenlängenspektrum ausgebildet und beispielsweise mit einem entsprechenden Filter zum Erzeugen von Infrarotlicht versehen sein.

Im Einzelnen ist die Anordnung so getroffen, dass die Kamera eine Zeilenkamera ist und eine optische Achse 18 aufweist, die in einem Winkel zu der das Linienlicht enthaltenden Ebene 19 verläuft. Das hindurch tretende Licht trifft so nicht unmittelbar in das Objektiv der Kamera, sondern die Kamera nimmt im so genannten Dunkelfeld ohne direkten Lichteinfall den auf der der Leuchte 16 abgekehrten Oberfläche 20 des Wafers entstehenden Lichtstreifen auf. Unerwünschte oder kritische Belichtungssituationen im Randbereich des Wafers können somit vermieden werden.

Weiterhin ist eine zweite Leuchte 22 vorgesehen, die die Oberfläche 20 des Wafers mit sichtbarem Licht beleuchtet. Bei dem in Fig. 2 gezeigten Ausführungsbeispiel ist diese Leuchte auf der der Infrarotleuchte 16 gegenüberliegenden Seite des Wafers 11 angeordnet. Die Leuchte erzeugt ebenfalls ein Linienlicht, das vorzugsweise den gleichen Abschnitt des Wafers im Bereich des Spaltes 15 beleuchtet, wie das Linienlicht der Infrarotleuchte 16. Es ist auf derselben Seite des Wafers 11 eine für sichtbares Licht empfindliche zweite Kamera 23 vorhanden, die das an dem beleuchten Abschnitt des Wafer gebeugte oder gestreute Linienlicht aufnimmt. Hierzu verläuft die optische Achse 25 der Kamera in einem Winkel zu der das Linienlicht der Leuchte 22 enthaltenden Ebene 26. Auch hier kann die Empfindlichkeit der Kamera durch einen entsprechenden Filter 24 eingestellt werden. Auch die Leuchte 22 kann als Breitbandleuchte mit einem breiten Wellenlängenspektrum ausgebildet und beispielsweise mit einem entsprechenden Filter zum Erzeugen von sichtbarem Licht versehen sein.

In Fig. 2 ist eine andere optische Anordnung gezeigt. Der Transport des Wafers 11 in Transportrichtung 13 erfolgt mit gleichen Mitteln und in gleicher Weise, und es sind in Fig. 2 gleiche und gleich wirkende Elemente mit gleichen Bezugszeichen versehen. Es ist eine Leuchte 27 vorgesehen, die als Breitbandleuchte mit breitem Wellenlängenspektrum ausgebildet ist und sowohl Infrarotlicht als auch Licht im sichtbaren Bereich ausstrahlt. Die Leuchte erzeugt ein Linienlicht, das den Wafer im Bereich des Spaltes 15 über seine gesamte Breite in der Richtung senkrecht zur Zeichnebene linienförmig beleuchtet.

Auf der der Leuchte gegenüber liegenden Seite ist eine für Infrarotlicht empfindliche Kamera 17 angeordnet, die das durch den Wafer hindurch tretende Licht empfängt. Auch hier verläuft die optische Achse 18 der Kamera winklig zu der Ebene 30 des Linienlichts. Auf der gleichen Seite wie die Leuchte 27 ist eine für sichtbares Licht empfindliche Kamera 23 vorhanden, die das an dem Wafer gestreute und/oder gebeugte Licht empfängt. Bei dieser Anordnung gemäß Fig. 2 ist nur eine Leuchte erforderlich. Die Kamera 23 kann aber auch für Infrarotlicht empfindlich sein und beispielsweise den nicht transmitterten Anteilteil des Infrarotlichts aufnehmen. Dann kann eine Infrarotleuchte ausreichen.

Zur Erhöhung der Genauigkeit kann vorgesehen werden, dass beide Oberflächen des Wafers mit sichtbarem Licht optisch abgetastet werden. In Fig. 1 ist diese Möglichkeit mit einer weiteren für sichtbares Licht empfindlichen Kamera 23' gestrichelt dargestellt. Hier ist es zweckmäßig, wenn die Lichte 16 als Breitbandleuchte ausgebildet ist.

Auch wäre es möglich, den Wafer von beiden Seiten mit Infrarotlicht zu durchleuchten. Dies ist in Fig. 1 mit einer weiteren für Infrarotlicht empfindlichen Kamera 17' ebenfalls gestrichelt dargestellt. Es ist zweckmäßig, wenn auch die Leuchte 22 als Breitbandleuchte ausgebildet ist.

Mit diesen optischen Anordnungen ist es möglich, jeweils den gleichen Abschnitt des Wafers mit Infrarotlicht und sichtbarem Licht zu beleuchten und das transmittierende Licht einerseits und das gebeugte oder gestreute Licht anderseits aufzunehmen. Vorzugsweise sind die Kameras 17, 17', 23, 23' als Zeilenkameras ausgebildet und der zeilenförmige Sensor verläuft parallel zur Breite des Wafers senkrecht zur Zeichenebene. Durch die Bewegung des Wafers senkrecht zur Zeilenrichtung der Kameras werden zeilenförmige aufgebaute Bilder des Wafers einmal unter Infrarotbeleuchtung und einmal unter Beleuchtung mit sichtbarem Licht erzeugt. Damit können Bereiche mit eventuellen Rissen selektiert werden. Die Risse können dann im Zuge einer weiteren Bildverarbeitung erkannt werden.

Bei den in der Zeichnung dargestellten Ausführungsbeispielen verläuft die Lichtebene 19, 26, 30 zur Erzeugung des Linienlichts senkrecht zur Oberfläche des Wafers. Die optischen Achsen 18, 25 der Kameras 17, 23, 17', 23' verlaufen in einem von 90° abweichenden Winkel zum Wafer. Es können aber auch andere winklige Anordnungen vorgesehen werden. Insbesondere können die optischen Achsen in einem rechten Winkel zum Wafer verlaufen, während sich die Lichtebenen in einem schrägen Winkel zum Wafer erstrecken.

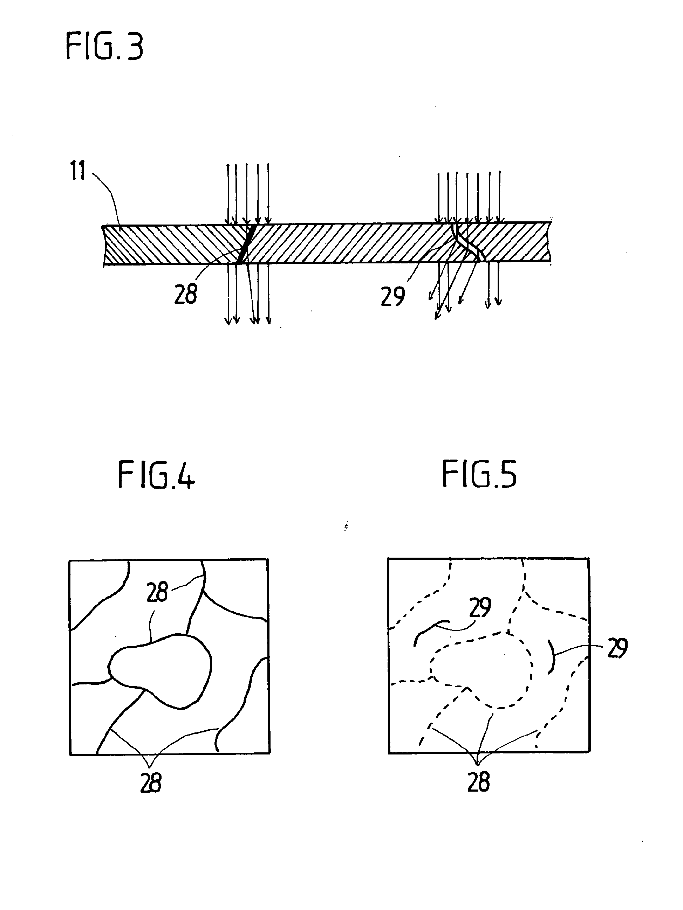

Die Wafer sind in der Regel dünne Platten, die aus einer Vielzahl von Kristallen bestehen. Einzelne Kristalle sind durch Korngrenzen 28 voneinander getrennt. Weiterhin können Risse 29 auftreten, die häufig einen schnellen Bruch des an sich spröden Wafers verursachen können. Halbleiter-Wafer und insbesondere Silizium-Wafer sind für Infrarotlicht durchlässig. In Fig. 3 ist der Strahlenverlauf des Infrarotlichts durch eine Wafer im Bereich eines Risses 29 und einer Korngrenze 28 schematisch dargestellt. Sowohl der Riss 29 als auch die Korngrenze 28 werden eine Ablenkung des hindurch tretenden Lichts bewirken, so dass diese Bereiche im erzeugten Bild als Kontrast und in der Regel dunkel erscheinen werden.

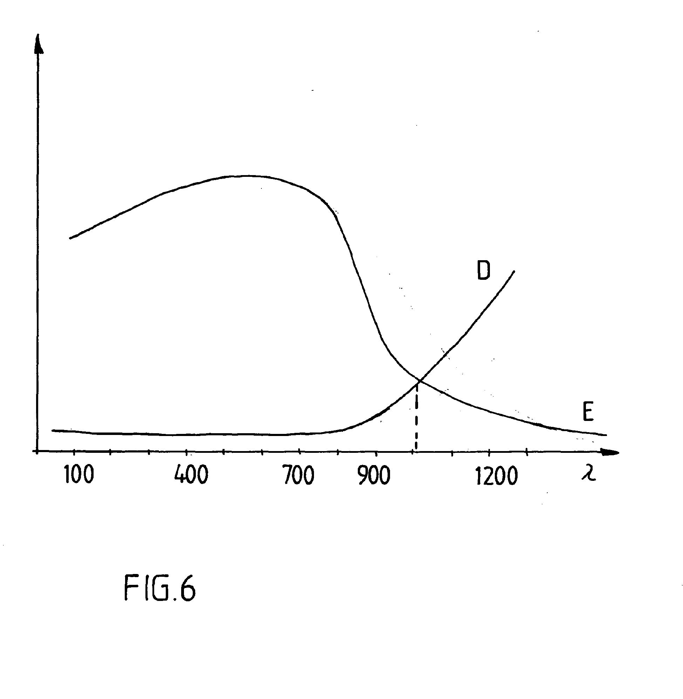

Risse weisen eine geringe Ausdehnung in Breitenrichtung auf. Auch erstrecken sie sich nicht immer von einer Oberfläche zur anderen Oberfläche des Wafers. Dies führt dazu, dass Risse unter einer Beleuchtung mit sichtbarem Licht nicht erkannt werden können. Fig. 4 zeigt schematisch die Abbildung eines Abschnitts einer Waferoberfläche mit Korngrenzen 28, wie sie bei der Belichtung einer Kamera mit sichtbarem Licht entsteht. Fig. 5 zeigt die Abbildung desselben Abschnitts, wie er bei der Belichtung einer Kamera mit Infrarotlicht entsteht. Die Korngrenzen 28 werden nach wie vor zu erkennen sein, jedoch werden zusätzlich die Risse 29 abgebildet.

Durch einen Vergleich dieser Bilder können die Bereiche mit eventuellen Rissen erkannt werden. So können durch die Erzeugung eines Differenzbilds die Korngrenzen eliminiert werden, sofern die Korngrenzen sowohl unter Infrarotlicht als auch unter sichtbarem Licht gleichartig abgebildet werden. Dies ist nicht immer der Fall, so dass auch Korngrenzen als linienförmige Erscheinungen als mögliche Risse auftreten. Diese können aber durch an sich bekannte Bildverarbeitungsschritte, wie Kanten- und Linienerkennungsverfahren von den tatsächlichen Rissen unterschieden werden. Mit diesem Aufbau können Halbleiter-Wafer auf Risse hin schnell und zuverlässig untersucht werden.

Die optische Eigenschaft von Silizium-Wafern, für Infrarotlicht durchlässig zu sein, kann bei der Auswahl der Kamera eine große Rolle spielen. Es sind besondere Infrarot-Kameras bekannt, deren lichtempfindlicher Sensor nicht aus Silizium besteht und für Infrarotlicht nicht durchlässig und somit hierfür empfindlich ist. Diese Sensoren sind zum gegenwärtigen Zeitpunkt jedoch relativ aufwändig und nur mit größerem Aufwand für die gewünschte Auflösung herstellbar.

Sofern demnach silizumhaltige Sensoren in den betreffenden Kameras 17, 17' eingesetzt werden, muss der Wellenlängenbereich des Infrarotlichts bezüglich der Empfindlichkeit des Sensors und der Durchlässigkeit des Wafers optimiert werden. Eine Möglichkeit ist in Fig. 6 schematisch dargestellt. In dem Graph sind die Empfindlichkeit E eines Sensors und die Durchlässigkeit D des Wafers über der Wellenlänge λ eingetragen. Im Bereich zwischen 900 nm und 1200 nm nimmt die Empfindlichkeit stark ab, während die Durchlässigkeit zunimmt. Es kann ein Schnittpunkt ermittelt werden, der einen günstigen Wellenlängenbereich markiert. Bei dem in Fig. 6 gezeigten Beispiel liegt der Schnittpunkt bei einer Wellenlänge von etwa 1000 nm, bei der der lichtempfindliche Empfänger noch empfindlich und der Wafer bereits gut durchlässig ist. Es können dann kontrastreiche Bilder mit ausreichender Lichtstärke erzeugt werden.

## Patentansprüche

1. Verfahren zum Erkennen von Rissen, insbesondere Mikrorissen in dünnen Wafer-Platten, insbesondere Halbleiter- oder Silizium-Wafern, bei welchem Verfahren der Wafer (11) mit Infrarotlicht durchleuchtet und durch das durch den Wafer transmittierende Licht wenigstens eine Kamera (17, 17') belichtet wird, die wenigstens ein erstes Bild zumindest eines Abschnitts des Wafers erzeugt, das in einer Bildverarbeitung ausgewertet wird, **dadurch gekennzeichnet, dass** zudem wenigstens eine Oberfläche (20) des Wafers mit Licht beleuchtet wird und das an der Oberfläche reflektierte, gestreute oder gebeugte Licht durch wenigstens eine Kamera (23, 23') aufgenommen wird, die wenigstens ein zweites Bild des gleichen Abschnitts des Wafers erzeugt, und dass in der Bildverarbeitung durch eine Verknüpfung des ersten und zweiten Bilds eventuell vorhandene Risse (29) detektiert werden.

2. Verfahren nach Anspruch 1, **dadurch gekennzeichnet, dass** der Wafer mit Infrarotlicht mit einer Wellenlänge von 900 nm bis weit in den Infrarotbereich, vorzugsweise zwischen 950 nm und 1500 nm, und weiter vorzugsweise zwischen 950 nm und 1200 nm durchleuchtet wird.

3. Verfahren nach Anspruch 1 oder 2, **dadurch gekennzeichnet, dass** die Oberfläche des Wafers mit Licht mit einer kleineren Wellenlänge als die des Infrarotlichts, vorzugsweise mit einer Wellenlänge von 200 nm bis 900 nm, beleuchtet wird.

4. Verfahren nach einem der Ansprüche 1 bis 3, **dadurch gekennzeichnet, dass** der Wafer mit einem Linienlicht durchleuchtet wird.

5. Verfahren nach Anspruch 4, **dadurch gekennzeichnet, dass** die optische Achse (18) der Kamera (17, 17') außerhalb der Ebene (19) des durchleuchtenden Linienlichts liegt.

6. Verfahren nach einem der Ansprüche 1 bis 3, **dadurch gekennzeichnet, dass** der Wafer mit einem Linienlicht beleuchtet wird.

7. Verfahren nach Anspruch 5, **dadurch gekennzeichnet, dass** die optische Achse (25) der Kamera (23, 23') außerhalb der Ebene (26) des beleuchtenden Linienlichts liegt.

8. Verfahren nach einem der Ansprüche 1 bis 7, **dadurch gekennzeichnet, dass** der Wafer (11) relativ zu der Kamera und/oder der Beleuchtung bewegt wird.

9. Verfahren nach einem der Ansprüche 1 bis 8, **dadurch gekennzeichnet, dass** die Bildverarbeitung Kantenerkennungs- und Linienerkennungsverfahren umfasst.

10. Vorrichtung zum Erkennen von Rissen, insbesondere von Mikrorissen, in dünnen Wafer-Platten, insbesondere Halbleiter- oder Silizium-Wafern, welche Vorrichtung wenigstens eine Infrarotlichtquelle (16), um den Wafer zu durchleuchten, und wenigstens eine für Infrarotlicht empfindliche Kamera (17, 17') aufweist, um das durch den Wafer transmittierende Licht zu empfangen und wenigstens ein erstes Bild zumindest eines Abschnitts des Wafers aufzunehmen, **dadurch gekennzeichnet, dass** wenigstens eine Lichtquelle (22), die wenigstens eine Oberfläche des Wafers mit Licht beleuchtet, und wenigstens eine für dieses Licht empfindliche Kamera (23, 23') vorhanden ist, um das an wenigstens eine Oberfläche (20) des Wafers reflektierte, gestreute oder gebeugte Licht zu empfangen und wenigstens ein zweites Bild des gleichen Abschnitts des Wafers aufzunehmen.

11. Vorrichtung nach Anspruch 10, **dadurch gekennzeichnet, dass** die Infrarotlichtquelle (16) Licht in einem Wellenlängenbereich zwischen 900 nm und weit bis in den Infrarotbereich, vorzugsweise zwischen 950 nm und 1500 nm und weiter vorzugsweise zwischen 950 nm und 1200 nm ausstrahlt.

12. Vorrichtung nach einem der Ansprüche 10 oder 11, **dadurch gekennzeichnet, dass** die Lichtquelle (22) zum Beleuchten des Wafers Licht mit einer kleineren Wellenlänge als die des Infrarotbereichs, vorzugsweise mit einer Wellenlänge von 200 nm bis 900 nm, ausstrahlt.

13. Vorrichtung nach einem der Ansprüche 10 bis 12, **dadurch gekennzeichnet, dass** die Infrarotlichtquelle (16) den Wafer mit einem Linienlicht durchleuchtet.

14. Vorrichtung nach Anspruch 13, **dadurch gekennzeichnet, dass** die Infrarotlichtquelle (16) so zur Kamera (17, 17') ausgerichtet ist, dass die optische Achse (18) der Kamera außerhalb der Ebene (19) des durchleuchtenden Linienlichts liegt.

15. Vorrichtung nach einem der Ansprüche 10 bis 13, **dadurch gekennzeichnet, dass** die Lichtquelle (22) die Oberfläche (20) des Wafers mit einem Linienlicht beleuchtet.

16. Vorrichtung nach Anspruch 15, **dadurch gekennzeichnet, dass** die Lichtquelle (22) so zur Kamera (23, 23') ausgerichtet ist, dass die optische Achse (25) der Kamera außerhalb der Ebene (26) des beleuchtenden Linienlichts liegt.

17. Vorrichtung nach Anspruch 10, **dadurch gekennzeichnet, dass** die Infrarotlichtquelle (16) und die Lichtquelle (22) jeweils als Breitbandleuchten ausgebildet sind oder aus einer einzigen Breitbandleuchte (27) gebildet werden.

18. Vorrichtung nach Anspruch 17, **dadurch gekennzeichnet, dass** eine nur für Infrarotlicht empfindliche Kamera (17) auf der der Breitbandlichtquelle (27) abgewandten Seite des Wafers angeordnet ist, während eine weitere nur für sichtbares Licht empfindliche Kamera (23) auf derselben Seite der Breitbandlichtquelle angeordnet ist.

19. Vorrichtung nach einem der Ansprüche 10 bis 17, **dadurch gekennzeichnet, dass** eine einzige Kamera vorhanden ist, deren Objektiv zeitlich aufeinander folgend mit einem Infrarotfilter und einem Filter für sichtbares Licht abdeckbar ist.

20. Vorrichtung nach einem der Ansprüche 10 bis 18, **dadurch gekennzeichnet, dass** auf einer Seite des Wafers eine für Infrarotlicht empfindliche Kamera (17) und eine für sichtbares Licht empfindliche Kamera (23) angeordnet ist, und dass auf dieser Seite die Lichtquelle (22) für sichtbares Licht und auf der gegenüberliegenden Seite des Wafers die Infrarotlichtquelle (16) oder jeweils Breitbandlichtquellen angeordnet sind.

21. Vorrichtung nach Anspruch 20, **dadurch gekennzeichnet, dass** auf der gegenüberliegenden Seite eine weitere für sichtbares Licht empfindliche Kamera (23') und eine Lichtquelle für sichtbares Licht oder eine Breitbandlichtquelle vorhanden ist.

22. Vorrichtung nach einem der Ansprüche 20 oder 21, **dadurch gekennzeichnet, dass** auf der gegenüberliegenden Seite eine weitere für Infrarotlicht empfindliche Kamera (17') und gegenüber eine weitere Lichtquelle für Infrarotlicht vorhanden ist oder die Lichtquelle als Breitbandlichtquelle ausgebildet ist.

23. Vorrichtung nach einem der Ansprüche 10 bis 22, **dadurch gekennzeichnet, dass** der Wafer relativ zu der Kamera und/oder der Lichtquelle und/oder Infrarotlichtquelle oder Breitbandlichtquelle auf einer Transporteinrichtung (12) in Transportrichtung (13) bewegbar ist.

24. Vorrichtung nach Anspruch 23, **dadurch gekennzeichnet, dass** die Fördermittel der Transporteinrichtung einen Spalt (15) begrenzen, der sich quer zur Transportrichtung über die gesamte Breite des Wafers erstreckt und der von dem Wafer (11) überspannt wird, wobei der überspannende Bereich den in den Kameras abgebildeten Abschnitt des Wafers enthält.
